Europäisches Patentamt

European Patent Office

Office européen des brevets

(19)

(11) Veröffentlichungsnummer: **0 090 144**
**B1**

(12)

# EUROPÄISCHE PATENTSCHRIFT

(45) Veröffentlichungstag der Patentschrift:
05.12.84

(51) Int. Cl.³: **C 04 B 7/44, F 27 B 7/20**

(21) Anmeldenummer: **83100903.0**

(22) Anmeldetag: **01.02.83**

(54) Verfahren und Vorrichtung zur Wärmebehandlung von feinkörnigem Gut.

(30) Priorität: **31.03.82 DE 3212009**

(43) Veröffentlichungstag der Anmeldung:
**05.10.83 Patentblatt 83/40**

(45) Bekanntmachung des Hinweises auf die Patenterteilung:
**05.12.84 Patentblatt 84/49**

(84) Benannte Vertragsstaaten:
**AT BE CH DE FR GB IT LI**

(56) Entgegenhaltungen:
**DE - A - 2 909 234**
**DE - A - 2 931 590**
**FR - A - 2 404 823**

(73) Patentinhaber: **Krupp Polysius AG,
Graf-Galen-Strasse 17, D-4720 Beckum (DE)**

(72) Erfinder: **Kreft, Wilfried, Ing. grad., Kirschweg 12,
D-4722 Ennigerloh (DE)**

(74) Vertreter: **Tetzner, Volkmar, Dr.-Ing. Dr. Jur. et al,
Van-Gogh-Strasse 3, D-8000 München 71 (DE)**

ACTORUM AG

## Beschreibung

Die Erfindung betrifft ein Verfahren entsprechend dem ersten Teil des Anspruches 1. Die Erfindung betrifft ferner eine Vorrichtung zur Durchführung dieses Verfahrens.

Bei der Wärmebehandlung von feinkörnigem Gut, insbesondere beim Brennen von Zement, hat es sich als vorteilhaft erwiesen, zwischen der durch einen Drehrohrofen gebildeten Brennzone und der Vorwärmzone eine besondere Calcinierzone vorzusehen, um auf diese Weise den grössten Teil der stark endothermen Calcination des Gutes ausserhalb des Drehrohrofens durchzuführen und dadurch den Drehrohrofen wärmetechnisch entlasten und kürzer gestalten zu können.

Bei einem bekannten Verfahren dieser Art (FR-A Nr. 2404823) sind zu diesem Zweck zwei gesonderte Calcinierzonen vorgesehen. Die eine befindet sich in der Steigleitung zwischen dem Drehrohrofen und dem untersten Zyklon des Vorwärmers, während die andere Calcinierzone in der Verbindungsleitung zwischen dem untersten und zweituntersten Zyklon des Vorwärmers angeordnet ist. Die vom Kühler kommende Tertiärluft wird hierbei in zwei Teilströme aufgeteilt, die den beiden Calcinierzonen zugeführt werden.

Ein gewisser Nachteil dieses bekannten Verfahrens liegt in der durch die Verwendung von zwei Calcinierzonen bedingten anlagetechnischen Komplizierung. Ungünstig ist weiterhin, dass sich im Übergangsbereich zwischen dem Drehrohrofen und der in der Steigleitung zum untersten Zyklon vorgesehenen ersten Calcinierzone vielfach unerwünschte Ansatzbildungen einstellen, da die Ofenabgase bis zum Erreichen der Calcinierzone ausserordentlich hohe Temperaturen besitzen, bei denen in den Ofenabgasen enthaltene Schadstoffe, wie Alkalien, stark zu Anbackungen neigen.

Dieselben Nachteile weist auch ein weiteres bekanntes Verfahren auf (DE-A Nr. 2931590), bei dem gleichfalls zwei Calcinierzonen vorgesehen sind, von denen die eine mit einer Mischung von Ofenabgasen und Tertiärluft und die andere ausschliesslich mit Tertiärluft betrieben wird.

Zum Stand der Technik gehört weiterhin ein Verfahren entsprechend dem ersten Teil des Anspruches 1 (DE-A Nr. 2909234), bei dem nur eine einzige Calcinierzone zwischen dem Drehrohrofen und dem Zyklonvorwärmer angeordnet ist und die von der Kühlzone kommende Tertiärluft in zwei Teilströme aufgeteilt ist. Hiervon mündet der eine Tertiärluft-Teilstrom in die vom Drehrohrofen zum untersten Zyklon des Vorwärmers führende Abgasleitung dicht unterhalb des Brenners der Calcinierzone ein, während der zweite Tertiärluft-Teilstrom an einer höher liegenden Stelle des Vorwärmers mit den Abgasen von Drehrohrofen und Calcinierzone vereinigt wird. Auch bei diesem bekannten Verfahren ergibt sich damit der Nachteil einer gefährlichen und leicht zu Betriebsstörungen Anlass gebenden Ansatzbildung durch die heissen Ofenabgase im Bereich zwischen dem Drehrohrofen und der Calcinierzone.

Der Erfindung liegt daher die Aufgabe zugrunde, ein Verfahren der im ersten Teil des Anspruches 1 vorausgesetzten Art (sowie eine zur Durchführung dieses Verfahrens geeignete Vorrichtung) zu schaffen, das bei verhältnismässig kurzem Drehrohrofen (und damit hoher Ofenabgastemperatur) sowie mit einfachen konstruktiven Mitteln einerseits eine Ansatzbildung in der zwischen dem Drehrohrofen und der Calcinierzone vorgesehenen Leitung vermeidet und andererseits eine wirtschaftliche Verbrennung des der Calcinierzone zugeführten Brennstoffes gewährleistet.

Diese Aufgabe wird erfindungsgemäss durch die kennzeichnenden Merkmale des Anspruches 1 gelöst.

Indem der erste Tertiärluft-Teilstrom mit den Ofenabgasen unmittelbar nach ihrem Austritt aus dem Drehrohrofen vermischt und eine Mischgastemperatur von etwa 1000°C eingestellt wird, werden Ansatzbildungen in der Leitung zwischen dem Drehrohrofen und der Calcinierzone vermieden. Gleichzeitig gewährleistet diese Mischgastemperatur eine wirtschaftliche und zuverlässige Verbrennung des der Calcinierzone zugeführten Brennstoffes.

Zweckmässige Ausgestaltungen der Erfindung ergeben sich aus den Unteransprüchen.

Ein Ausführungsbeispiel der Erfindung ist in der Zeichnung veranschaulicht. Es zeigen:

Fig. 1 eine ganz schematisch gehaltene Gesamtansicht einer Vorrichtung zur Durchführung des erfindungsgemässen Verfahrens;

Fig. 2 eine vereinfachte Vertikalschnittansicht im Bereich Drehrohrofen-Einlaufende/Calciniereinrichtung;

Fig. 3 eine Teilgrundrissansicht etwa entlang der Linie III-III in Fig. 2, und

Fig. 4 eine noch weiter vereinfachte Schemaansicht der Gesamtvorrichtung mit Betriebsdaten zur Erläuterung eines Arbeitsbeispieles der Vorrichtung.

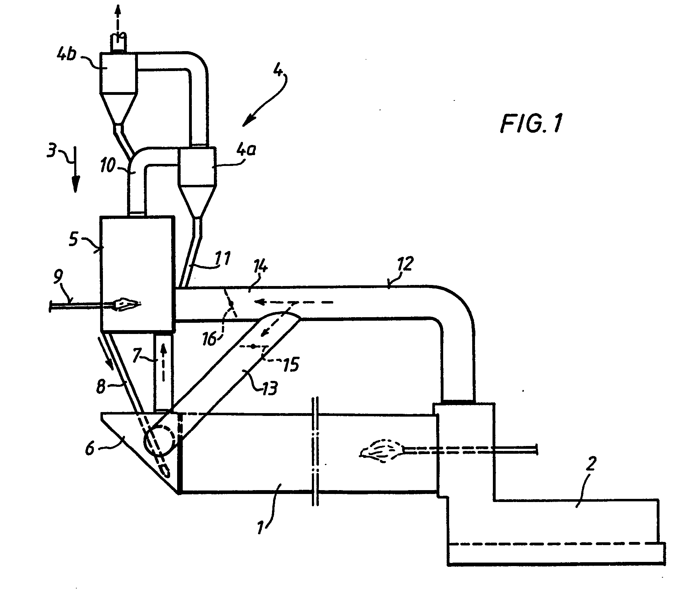

Der Gesamtaufbau der Wärmebehandlungsvorrichtung sei zunächst anhand der Fig. 1 erläutert.

Die Vorrichtung enthält einen Drehrohrofen 1, einen dem Drehrohrofen nachgeschalteten, in üblicher Weise ausgebildeten Kühler 2, einen — in der allgemeinen Bewegungsrichtung (Pfeil `3) des Feingutes betrachtet — vor dem Drehrohrofen 1 befindlichen Vorwärmer 4 sowie eine zwischen dem Vorwärmer 4 und dem Drehrohrofen 1 angeordnete Calciniereinrichtung 5.

Da der Drehrohrofen 1 aufgrund der vorgeschalteten Calciniereinrichtung 5 weitgehend von der Calcinierarbeit für das Feingut (insbesondere Zementrohmehl) befreit ist, ist dieser vorzugsweise als Kurzdrehrohrofen ausgebildet, der ein Länge/Durchmesser-Verhältnis von ca. 8:1 bis 20:1 besitzt. Diese Ausführungsform bringt beträchtliche bauliche Vorteile (z.B. nur zwei Stützrollenstationen). Dem Guteinlaufende des Drehrohrofens 1 ist eine feststehende Einlaufkammer 6 zugeordnet, die an ihrem oberen Ende über eine Abgasleitung 7 mit der Calciniereinrichtung 5 in Verbindung steht; ausserdem führt von dieser Calciniereinrichtung 5 eine Gutleitung 8 in die Einlaufkammer 6, vorzugsweise in deren unteren Teil.

Die die Calcinierzone bildende Calciniereinrichtung 5 kann in herkömmlicher Weise ausgebildet sein, wobei sie eine Zuführung 9 für zusätzlichen Brennstoff besitzt. Auch der über der Calciniereinrichtung 5 angeordnete Vorwärmer 4 kann üblicher Ausführung sein, wobei jedoch ein mehrstufiger Zyklonvorwärmer bevorzugt wird, von dem in Fig. 1 lediglich die beiden untersten Zyklonstufen 4a, 4b dargestellt sind. Mit diesem Vorwärmer 4 bzw. dessen unterster Zyklonstufe 4a ist die Calciniereinrichtung direkt über eine Vorcalcinations-Abgasleitung 10 sowie indirekt durch eine Gutleitung 11 verbunden.

Vom Kühler 2 bzw. aus dem Übergangsbereich Drehrohrofen 1/Kühler 2 führt eine Tertiärluftleitung 12 in den Bereich Drehrohrofen-Einlaufkammer 6/Calciniereinrichtung 5. Diese Tertiärluftleitung 12 ist in zwei Abzweigleitungen 13 und 14 unterteilt, von denen die erste Abzweigleitung 13 unmittelbar an die Einlaufkammer 6 des Drehrohrofens 1 und die zweite Abzweigleitung 14 direkt an die Vorcalciniereinrichtung 5 angeschlossen ist. In beiden Abzweigleitungen 13, 14 sind einstellbare Drosselklappen 15 bzw. 16 angeordnet, um die Tertiärluft in ihrer Menge einerseits der Einlaufkammer 6 und andererseits der Calciniereinrichtung 5 zuteilen zu können.

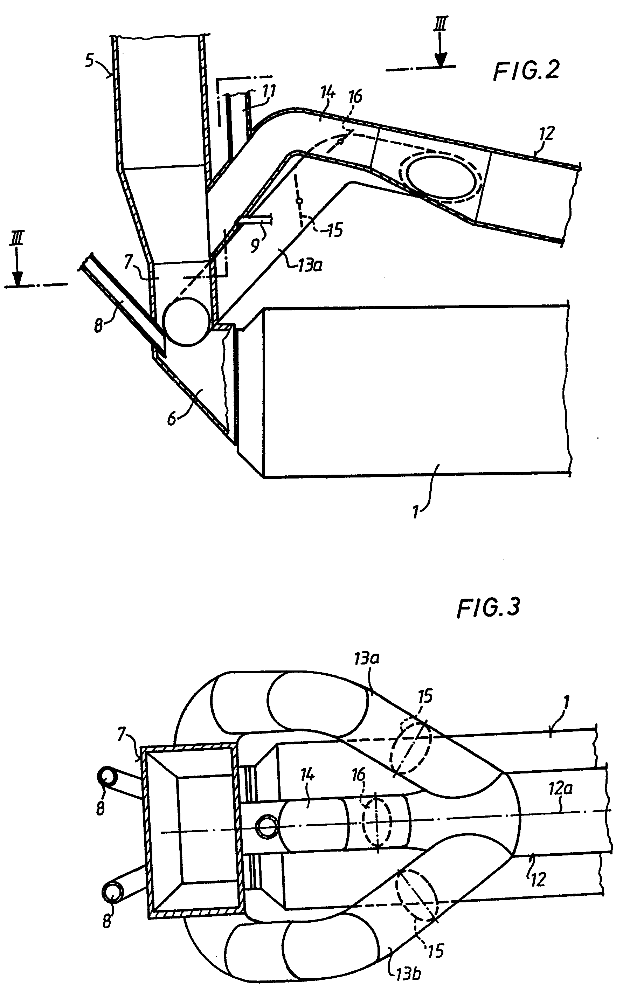

Die bauliche Anordnung und Ausbildung der Tertiärluftleitung 12 ist in den Fig. 2 und 3 näher veranschaulicht. Generell ist es selbstverständlich möglich, die erste Abzweigleitung 13, die zur Einlaufkammer 6 führt, als einfache Leitung auszubilden. Beim veranschaulichten Ausführungsbeispiel wird es jedoch vorgezogen, diese erste Tertiärluft-Abzweigleitung 13 in mehrere, vorzugsweise in zwei Teilabzweigleitungen 13a, 13b zu unterteilen. Zweckmässig sind diese beiden Teilabzweigleitungen 13a, 13b – im Grundriss (Fig. 3) gesehen – symmetrisch zu beiden Seiten der zweiten Tertiärluft-Abzweigleitungen 14 angeordnet, die mit ihrer Achse etwa in der vertikalen Längsmittelebene 12a der Tertiärluftleitung 12 liegt. Besonders günstig für die Vermischung von Tertiärluft und Ofenabgasen ist es, wenn die Teilabzweigleitungen 13a, 13b auf einander gegenüberliegenden Seiten in die Einlaufkammer 6 des Drehrohrofens 1 einmünden (vgl. Fig. 3). Bei dieser Unterteilung der ersten Tertiärluft-Abzweigleitung 13 ist jeder Teilabzweigleitung 13a, 13b eine Drosselklappe 16 zugeordnet.

Damit möglichst wenig vorcalciniertes Gut mit dem Gemisch aus Ofenabgasen und Tertiärluft aus der Einlaufkammer 6 mitgerissen wird, können die beiden Teilabzweigleitungen 13a, 13b der ersten Tertiärluft-Abzweigleitung 13 in einem Bereich in die Einlaufkammer 6 einmünden, der oberhalb der Anschlussstelle für die Gutleitung 8 liegt (vgl. Fig. 1 und 2).

Für die Calcinierung bzw. Vorcalcinierung des im Vorwärmer 4 vorgewärmten Gutes kann es ferner zweckmässig sein, wenn die vom Zyklonvorwärmer 4 kommende Gutleitung 11 kurz vor der Calciniereinrichtung 5 in die zweite Tertiärluft-Abzweigleitung 14 einmündet, so dass dann der hierin befindliche Tertiärluftanteil bereits mit dem vorgewärmten Gut gemischt wird, bevor dieses mit dem bei 9 zugeführten Brennstoff in Berührung kommt.

In der zuvor geschilderten Vorrichtung ist es somit in äusserst günstiger Weise möglich, die in der Tertiärluftleitung 12 vom Kühler 2 herangeführte Tertiärluft in zwei Teilströme aufzuteilen, von denen dann der erste Teilstrom (in der ersten Abzweigleitung 13) mit den Ofenabgasen unmittelbar nach ihrem Austritt aus dem Drehrohrofen 1 (in der Einlaufkammer 6) vermischt wird, während der zweite Teilstrom durch die zweite Abzweigleitung 14 direkt in die Calcinierzone innerhalb der Calciniereinrichtung 5 eingeleitet wird. Die in den Abzweigleitungen 13 und 14 vorgesehenen Drosselklappen 15, 16 gestatten eine genaue Bemessung insbesondere des in die Einlaufkammer 6 geführten ersten Teilstromes der Tertiärluft, und zwar in der Weise, dass durch die Vermischung dieses Teilstromes mit den Ofenabgasen die Temperatur des Mischgases auf etwa 1000° C eingestellt werden kann. Die vorgenommene Unterteilung der ersten Abzweigleitung 13 in Teilabzweigleitungen sowie die Anordnung von Drosselklappen 16 in jeder Teilabzweigleitung 13a, 13b gestattet ferner eine äusserst günstige Einstellung der erhaltenen Unterströme zueinander sowie eine günstige Beeinflussung der Vermischung innerhalb der Einlaufkammer 6.

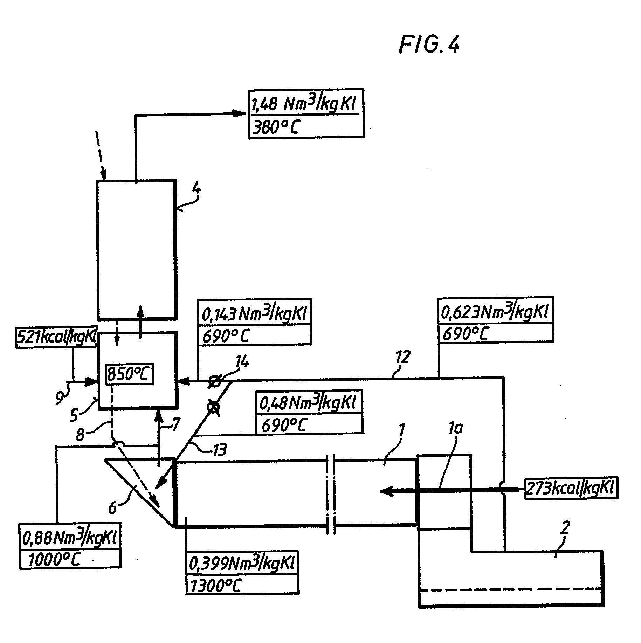

Ein Arbeitsbeispiel sei im folgenden anhand der Fig. 4 erläutert, um insbesondere die Gastemperaturen und deren Mengenverhältnisse in verschiedenen Vorrichtungsteilen bzw. Bereichen zu erläutern.

Dem Drehrohrofen 1, der nach dem Gegenstromprinzip arbeitet, werden über seinen Brenner 1a ca. 273 kcal/kg Kl zugeführt. An dem der Einlaufkammer 6 benachbarten Einlaufende besitzen die hier ausströmenden Ofenabgase eine Temperatur von etwa 1300° C, wobei eine Luftmenge von 0,399 Nm³/kg Kl vorhanden sind bzw. in die Einlaufkammer 6 eintreten. Mit Hilfe der Tertiärluftleitung 12 werden aus dem Kühler 2 etwa 0,623 Nm³/kg Kl mit etwa 690° C abgezogen. Diese Tertiärluft wird so aufgeteilt, dass etwa 0,143 Nm³/kg Kl der Vorcalciniereinrichtung 5 zugeleitet wird, während der andere Teilstrom mit etwa 0,48 Nm³/kg Kl über die erste Abzweigleitung 13 (bzw. die Teilabzweigleitungen 13a, 13b) der Einlaufkammer 6 unmittelbar zugeleitet wird. Diese Teilströme besitzen ebenfalls noch eine Temperatur von etwa 690° C, wobei der erste Teilstrom mit einer Geschwindigkeit von etwa 30 m/s in die Einlaufkammer 6 eingeleitet wird. Nach der Mischung dieses ersten Teilstromes mit den Ofenabgasen innerhalb der Einlaufkammer 6 soll das erhaltene Mischgas eine Temperatur von etwa 1000° C haben. Dieses Mischgas wird dann in einer Menge von 0,88 Nm³/kg Kl über die Ofenabgasleitung 7 der Calciniereinrichtung 5 zugeleitet. Ausserdem erhält die Calciniereinrichtung 5 geeigneten flüssigen, gasförmigen oder feinkörnigen Brennstoff für 521 kcal/kg Kl, so dass in dieser Calciniereinrichtung 5 ein Entsäuerungsgrad von wenigstens 90° C für das Feingut herbeigeführt wird, wobei die Guttemperatur auf etwa 850°C eingestellt wird. Die die Calciniereinrichtung 5 verlassenden Abgase werden in üblicher Weise im Zyklonvorwärmer 4 zur Vorwärmung des Feingutes ausgenutzt, und diesen Vorwärmer 4 verlassen die Abgase mit einer Temperatur von etwa 380°C und in einer Menge von 1,48 Nm³/kg Kl.

## Patentansprüche

1. Verfahren zur Wärmebehandlung von feinkörnigem Gut, insbesondere zum Brennen von Zement, unter Verwendung eines Drehrohrofens als Brennzone, einer Vorwärmzone zur Vorwärmung des Gutes mit den Abgasen des Drehrohrofens sowie einer zwischen der Vorwärmzone und der Brennzone angeordneten Calcinierzone, der ausser den Ofenabgasen zusätzlicher Brennstoff zugeführt wird, wobei von einer Kühlzone kommende Tertiärluft in zwei Teilströme aufgeteilt und der Calcinierzone ausser den Ofenabgasen auch ein Tertiärluft-Teilstrom zugeführt wird, dadurch gekennzeichnet, dass der erste Tertiärluft-Teilstrom mit den Ofenabgasen unmittelbar nach ihrem Austritt aus dem Drehrohrofen vermischt wird, während der zweite Tertiärluft-Teilstrom direkt der Calcinierzone zugeleitet wird, wobei der erste Teilstrom derart bemessen wird, dass sich durch die Vermischung dieses Teilstromes mit den Ofenabgasen eine Mischgastemperatur von etwa 1000°C einstellt.

2. Verfahren nach Anspruch 1, dadurch gekennzeichnet, dass der mit den Ofenabgasen unmittelbar vermischte, erste Teilstrom seinerseits in wenigstens zwei Unterströme aufgeteilt wird, die den Ofenabgasen an verschiedenen Stellen, vorzugsweise an gegenüberliegenden Stellen, zugeführt werden.

3. Verfahren nach Anspruch 2, dadurch gekennzeichnet, dass die Unterströme in ihren Mengenanteilen zueinander eingestellt werden können.

4. Vorrichtung zur Durchführung des Verfahrens nach wenigstens einem der vorhergehenden Ansprüche, enthaltend einen Drehrohrofen mit nachgeschaltetem Kühler, einen in Bewegungsrichtung des Gutes vor dem Drehrohrofen befindlichen Vorwärmer sowie eine zwischen Vorwärmer und Drehrohrofen angeordnete Calciniereinrichtung, wobei eine dem Guteinlaufende des Drehrohrofens zugeordnete Einlaufkammer über eine Tertiärluftleitung mit dem Kühler und über eine Abgasleitung mit der Calciniereinrichtung in Verbindung steht, dadurch gekennzeichnet, dass die Tertiärluftleitung (12) eine erste Abzweigleitung (13), die an die Einlaufkammer (6) des Drehrohrofens (1) angeschlossen ist, ferner eine zweite Abzweigleitung (14), die zur Calciniereinrichtung (5) führt, sowie einstellbare Drosseleinrichtungen (15, 16) für die Aufteilung der Tertiärluft zur Einlaufkammer einerseits und zur Calciniereinrichtung (5) andererseits aufweist.

5. Vorrichtung nach Anspruch 4, dadurch gekennzeichnet, dass die an die Einlaufkammer (6) angeschlossene erste Tertiärluft-Abzweigleitung (13) in wenigstens zwei Teilabzweigleitungen (13a, 13b) unterteilt ist, die auf einander gegenüberliegenden Seiten in die Einlaufkammer einmünden und je eine Drosselklappe (16) enthalten.

6. Vorrichtung nach einem der beiden Ansprüche 4 und/oder 5 wobei zwischen der Ofeneinlaufkammer und der Calciniereinrichtung eine Gutleitung vorhanden ist, dadurch gekennzeichnet, dass die erste Tertiärluft-Abzweigleitung (13) in einem Bereich in die Einlaufkammer (6) einmündet, der oberhalb der Anschlussstelle für die Gutleitung (8) liegt.

7. Vorrichtung nach Anspruch 4, wobei der Vorwärmer als mehrstufiger Zyklonvorwärmer ausgebildet ist, der einerseits über eine Calcinationsabgasleitung und andererseits über eine Gutleitung mit der Calciniereinrichtung in Verbindung steht, dadurch gekennzeichnet, dass die vom Zyklonvorwärmer (4) kommende Gutleitung (11) kurz vor der Calciniereinrichtung (5) in die zu dieser Calciniereinrichtung (5) führende zweite Tertiärluft-Abzweigleitung (14) einmündet.

8. Vorrichtung nach Anspruch 4, dadurch gekennzeichnet, dass der Drehrohrofen (1) als Kurzdrehrohrofen mit einem Länge/Durchmesser-Verhältnis von ca. 8:1 bis 10:1 ausgebildet ist.

## Claims

1. Method of heat treatment of fine-grained material, especially for burning cement, using a rotary kiln as a combustion zone, a preheating zone for preheating the material with the exhaust gases from the rotary kiln, and a calcination zone arranged between the preheating zone and the combustion zone to which further combustion material is delivered in addition to the exhaust gases from the kiln, tertiary air from a cooling zone being divided into two streams, one of said tertiary air streams being delivered to said calcination zone in addition to the exhaust gases from the kiln, characterised in that the first tertiary air stream is mixed together with the kiln exhaust gases immediately after the escape from the rotary kiln, whilst the second tertiary air stream is led directly to the calcination zone, the first stream being regulated so that by mixing this stream with the kiln exhaust gases the mixed gas temperature of approximately 1,000°C is set.

2. Method as claimed in Claim 1, characterised in that the first stream which is directly mixed with the kiln exhaust gases is divided into at least two subsidiary streams which are delivered to the kiln exhaust gases at various points, preferably at opposing points.

3. Method as claimed in Claim 2, characterised in that the proportional quantities of the subsidiary streams can be adjusted to each other.

4. Apparatus for carrying out the method according to at least one of the preceding claims, containing a rotary kiln with a cooler arranged after it, a preheater located before the rotary kiln in the direction of movement of the material, and a calcination arrangement arranged between the preheater and the rotary kiln, in which an inlet chamber associated with the material inlet end of the rotary kiln is connected *via* a tertiary air pipe to the coolor and *via* an exhaust gas pipe to the calcination arrangement, characterised in that the tertiary air pipe (12) has a first branch pipe (13) which is connected to the inlet chamber (6) of the rotary kiln (1), a second branch pipe (14) which leads to the calcination arrangement (5), and adjustable throttle arrangements (15, 16) for the division of the tertiary air for the inlet chamber on the one hand and the calcination arrangement (5) on the other hand.

5. Apparatus as claimed in Claim 4, characterised in that the first tertiary air branch pipe (13) is divided into at least two subsidiary branch pipes (13a, 13b) which open into the inlet chamber on opposing sides and each contain a throttle valve (16).

6. Apparatus as claimed in Claims 4 and/or 5, with a material pipe between the kiln inlet chamber and the calcination arrangement, characterised in that the first tertiary air branch pipe (13) opens into the inlet chamber (6) in a region which lies above the connection point for the material pipe (8).

7. Apparatus as claimed in Claim 4, in which the preheater is constructed as a multi-stage cyclone preheater which is connected, on the one hand, *via* a calcination exhaust gas pipe and, on the other hand, *via* a material pipe to the calcination arrangement, characterised in that the material pipe (11) coming from the cyclone preheater (4) opens into the second tertiary air branch pipe (14) leading to the calcination arrangement (5) shortly before this calcination arrangement (5).

8. Apparatus as claimed in Claim 4, characterised in that the rotary kiln (1) is constructed as a short rotary kiln with a length: diameter ratio of approximately 8:1 to 10:1.

**Revendications**

1. Procédé de traitement thermique de produit à granulométrie fine, en particulier de cuisson de ciment à l'aide d'un four tubulaire rotatif constituant la zone de cuisson, d'une zone de réchauffage du produit par les gaz de combustion du four tubulaire ainsi que d'une zone de calcinage disposée entre la zone de réchauffage et la zone de cuisson et recevant un complément de combustible en plus des gaz de combustion du four, de l'air tertiaire provenant d'une zone de refroidissement étant divisé en deux courants partiels et la zone de calcinage recevant également un courant partiel d'air tertiaire en plus des gaz de combustion du four, procédé caractérisé en ce que le premier courant partiel d'air tertiaire est mélangé aux gaz de combustion du four immédiatement à leur sortie de ce dernier, tandis que le second courant partiel d'air tertiaire est dirigé directement sur la zone de calcinage, le premier courant partiel étant calculé de manière que son mélange avec les gaz de combustion du four confère au mélange gazeux une température d'environ 1000°C.

2. Procédé selon la revendication 1, caractérisé en ce que le premier courant partiel mélangé directement aux gaz de combustion du four est divisé de son côté en au moins deux sous-courants qui sont mélangés aux gaz de combustion du four en différents emplacements, de préférence en des emplacements opposés.

3. Procédé selon la revendication 2, caractérisé en ce que les fractions quantitatives des sous-courants sont réglables l'une par rapport à l'autre.

4. Dispositif pour la mise en œuvre du procédé selon au moins l'une des revendications précédentes, comprenant un four tubulaire rotatif en aval duquel est monté un réfrigérant, un réchauffeur ou récupérateur se trouvant en amont du four tubulaire par rapport au sens du déplacement du produit, ainsi qu'un dispositif de calcinage disposé entre le réchauffeur et le four tubulaire rotatif, une chambre d'entrée, dont est équipée l'extrémité d'admission du produit du four tubulaire rotatif, communiquant par une canalisation d'air tertiaire avec le réfrigérant et par une canalisation de gaz de combustion avec le dispositif de calcinage, dispositif caractérisé en ce que la canalisation d'air tertiaire (12) comprend un premier embranchement (13) qui est raccordé à la chambre d'entrée (6) du four tubulaire rotatif (1) ainsi qu'un second embranchement (14) qui mène au dispositif de calcinage (5) et des dispositifs réglables d'étranglement (15, 16) destinés à la répartition de l'air tertiaire d'une part sur la chambre d'entrée, et d'autre part sur le dispositif de calcinage (5).

5. Dispositif selon la revendication 4, caractérisé en ce que le premier embranchement d'air tertiaire (13), qui est raccordé à la chambre d'entrée (6), est subdivisé en au moins deux sous-embranchements (13a, 13b) qui débouchent sur des côtés opposés dans la chambre d'entrée et renferment chacun un clapet d'étranglement (15).

6. Dispositif selon l'une des revendications 4 et/ou 5, une canalisation de produit se trouvant entre la chambre d'entrée du four tubulaire et le dispositif de calcinage, caractérisé en ce que le premier embranchement d'air tertiaire (13) débouche dans la chambre d'entrée (6) en un emplacement situé au-dessus du raccordement de la canalisation d'arrivée du produit (8).

7. Dispositif selon la revendication 4, le réchauffeur ou récupérateur étant du type à cyclones à plusieurs étages et communiquant, d'une part, par une canalisation de gaz de combustion destinés à la calcination et, d'autre part, par une canalisation de transfert du produit avec le dispositif de calcinage, caractérisé en ce que la canalisation de transfert du produit (11) qui provient du réchauffeur à cyclones (4) débouche peu au-devant du dispositif de calcinage (5) dans le second embranchement d'air tertiaire (14) qui mène à ce dernier.

8. Dispositif selon la revendication 4, caractérisé en ce que le four tubulaire rotatif (1) est de type court dont le rapport de la longueur au diamètre est d'environ 8:1 à 10:1.

FIG.1

FIG.2

FIG.3

# FIG. 4